# FASCICULE DE BREVET EUROPEEN

(11) **EP 3 171 231 B1**
(45) Date de publication et mention de la délivrance du brevet: **06.06.2018**
(21) Numéro de dépôt: 15195209.0
(22) Date de dépôt: 18.11.2015
(51) Int. Cl.: G04C 3/14, H02P 8/02

(54) **CIRCUIT DETECTEUR DE CHOCS ET SON PROCEDE DE FONCTIONNEMENT**
STOSSDETEKTORSCHALTKREIS UND SEIN FUNKTIONSVERFAHREN
SHOCK DETECTOR CIRCUIT AND OPERATING METHOD THEREOF

(43) Date de publication de la demande: 24.05.2017
(73) Titulaire: ETA SA Manufacture Horlogère Suisse, 2540 Grenchen (CH)
(72) Inventeur: Klopfenstein, François, 2800 Delémont (CH); Berthoud, Joerg, 2613 Villeret (CH); Jeannet, Nicolas, 2019 Chambrelien (CH); Godat, Yves, 2087 Cornaux (CH); Bonnet, Thierry, 1205 Genève (CH)
(74) Mandataire: Goulette, Ludivine

(56) Documents cités:
- EP-A1- 1 117 016
- EP-A1- 1 693 720
- EP-A1- 2 249 214
- FR-A1- 2 426 999
- JP-A- S5 866 887

## Description

La présente invention concerne un dispositif électronique comprenant une unité de calcul capable de générer un signal représentatif d'une grandeur physique, d'un moteur entraînant un dispositif d'affichage, ledit moteur comprenant deux bornes, positive et négative, par lesquelles l'unité de calcul le commande, le dispositif électronique comprenant en outre deux circuits de détection de chocs connectés entre l'unité de calcul et les bornes du moteur pour la détection d'un choc externe appliqué au moteur

### ARRIERE PLAN TECHNOLOGIQUE

Il est connu des pièces d'horlogeries comprenant un boitier dans lequel un mouvement d'horlogerie électromécanique est agencé. Un tel mouvement est cadencé par un système oscillateur à quartz. Pour l'affichage des indications horaires telles que l'heure et la seconde, des aiguilles sont montées sur des moteurs pour être entraînées en rotation. Les moteurs utilisés sont des moteurs de type Lavet appelés aussi moteurs pas à pas. Dans ces moteurs, un rotor aimanté de forme cylindrique crée un champ magnétique radial dans l'entrefer d'un circuit magnétique sur lequel est enroulée une bobine dont les bornes sont connectées à un circuit de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique.

Ces moteurs situés dans la montre subissent des chocs pouvant venir de chutes de la montre ou encore de mouvement violent de l'utilisateur. Ces chocs sont alors susceptibles de perturber le fonctionnement des moteurs. Ces perturbations consistent en un déplacement non contrôlé du ou des rotors dû à leur inertie provoquant le saut d'au moins un pas.

Par conséquent, les indications horaires fournies par les aiguilles risquent de ne plus être exactes.

Pour remédier à cela, il existe des systèmes de détection de chocs. Pour cela, un dispositif électronique se charge de mesurer la tension induite par le moteur lors du choc. En effet, sous l'effet du déplacement (rotation) du rotor, une tension induite est générée. Cette tension induite est détectée par un circuit de détection qui compare cette tension induite à un seuil prédéterminé. Si celle tension est supérieure audit seuil, le circuit de détection en déduit qu'un choc est survenu et transmet l'information à une unité de commande.

En réponse à ce choc, l'unité de commande envoie audit moteur une impulsion de blocage utilisée pour bloquer la rotation du rotor due au choc.

Or, l'impulsion de blocage doit permettre de bloquer le rotor dans une position bien définie de sorte qu'aucune erreur de position de l'aiguille ne se produise.

EP2249214 divulgue un dispositif ayant un circuit de blocage.

FR2426999 divulgue un dispositif avec deux circuits de détection du chocs.

EP1693720 divulgue un dispositif émettant impulsions de blocage ayant une durée maximale de 58.5 ms.

### RESUME DE L'INVENTION

L'invention a pour but de pallier les inconvénients de l'art antérieur en proposant de fournir un dispositif de détection de chocs d'un moteur permettant une détection d'un choc de manière plus rapide et plus précise.

A cet effet, la présente invention concerne un dispositif électronique comprenant une unité de calcul capable de générer un signal représentatif d'une grandeur physique, d'un moteur entrainant un dispositif d'affichage, ledit moteur comprenant un rotor dans un circuit magnétique, deux bornes, positive et négative, par lesquelles l'unité de calcul le commande, le dispositif électronique comprenant en outre deux circuits de détection de chocs, chaque circuit de détection de chocs étant connecté entre l'unité de calcul et une borne du moteur pour la détection d'un choc externe appliqué au moteur,
ledit moteur présentant une première position d'équilibre stable placée à une position angulaire de référence et une seconde position d'équilibre stable placée à 180 degrés de la première position angulaire stable, pour chaque sens de rotation, une position angulaire limite à partir de laquelle il n'est plus possible de ramener le rotor du moteur dans une position angulaire antérieure,
l'unité de calcul utilisant un algorithme permettant, suite à un choc, de détecter le sens de rotation du rotor en analysant une tension induite détectée par ledit circuit de détection de chocs et ordonner l'envoi d'une impulsion de blocage ayant une polarité inverse de celle de la tension induite,
l'impulsion de blocage présentant une durée maximale de 58.5ms permettant de stopper la rotation du rotor due à un choc et de la ramener dans une position angulaire prédéterminée avant que la position angulaire limite soit atteinte.

Dans un premier mode de réalisation avantageux, l'impulsion de blocage a un taux de hachage variant de 25% à 100%.

Dans un second mode de réalisation avantageux, l'impulsion de blocage comprend au moins une première et une seconde phase temporelle distinctes, chaque phase pouvant présenter un taux de hachage distinct.

Dans un troisième mode de réalisation avantageux, la seconde phase présente une durée supérieure à la première phase.

Dans un quatrième mode de réalisation avantageux, la seconde phase présente une durée deux fois supérieure à la première phase.

Dans un cinquième mode de réalisation avantageux, le circuit de détection de chocs comprend une partie de sélection apte à permettre un réglage de la sensibilité de détection.

Dans un autre mode de réalisation avantageux, la partie de sélection permet une plage sensibilité allant de 50 à 600 millivolts.

Dans un autre mode de réalisation avantageux, le moteur est agencé pour que la position d'équilibre stable du rotor soit positionnée à un angle de 90 degrés par rapport à l'axe principal du flux magnétique généré par la bobine, la position angulaire limite étant, pour chaque sens de rotation, de 270 degrés par rapport à la position de référence.

Dans un autre mode de réalisation avantageux, le moteur est agencé pour que la position d'équilibre stable du rotor soit positionnée à un angle d'au moins 30 degrés par rapport à l'axe principal du flux magnétique généré par la bobine stable, la position angulaire limite étant, pour chaque sens de rotation, d'au moins 120 degrés par rapport à la position de référence.

Dans un autre mode de réalisation avantageux, l'impulsion de blocage est envoyée au moteur via l'une ou l'autre de ses bornes de connexion.

### BREVE DESCRIPTION DES FIGURES

Les buts, avantages et caractéristiques de l'invention apparaîtront plus clairement dans la description détaillée suivante d'au moins une forme de réalisation de l'invention et illustrée par les dessins annexés sur lesquels :
- La figure 1 représente un schéma général du dispositif électronique selon l'invention;
- Les figures 2 et 3 représentent des vues détaillées d'un circuit de détection de chocs selon l'invention;
- La figure 4 à 6 représentent schématiquement un moteur selon l'invention;
- La figure 7 représente des diagrammes de fonctionnement du dispositif électronique selon l'invention.

### DESCRIPTION DETAILLEE

La présente invention procède de l'idée générale de fournir un dispositif de détection de chocs d'un moteur permettant une détection d'un choc de manière plus rapide et plus précise.

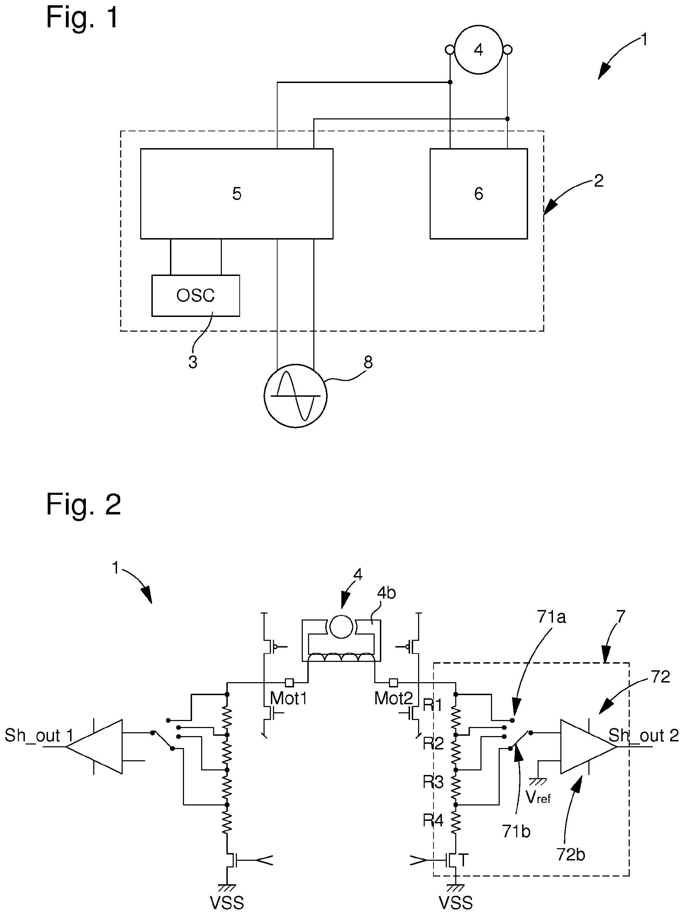

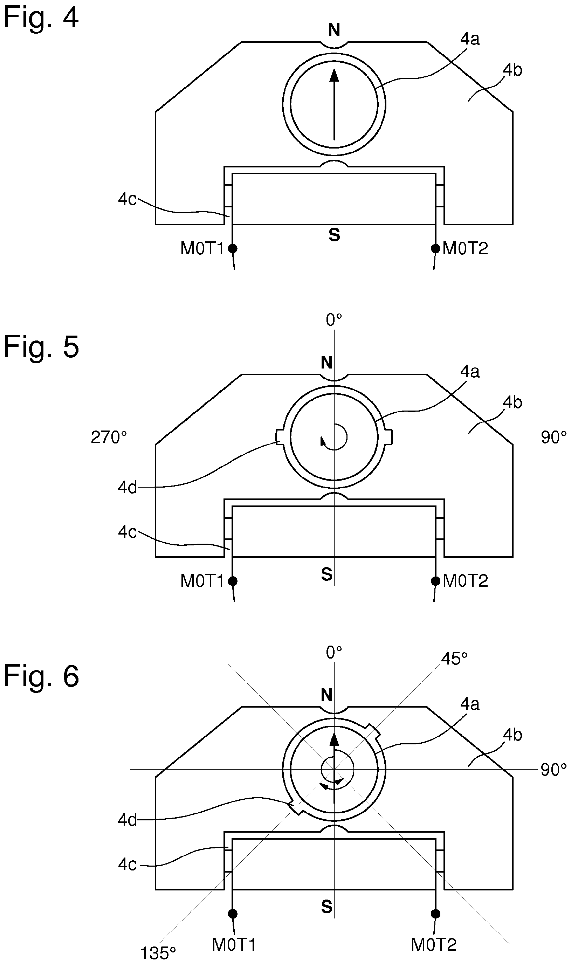

Sur la figure 1 est représentée une vue schématique d'un mouvement électronique selon la présente invention. Ce mouvement ou dispositif électronique 1 comprend un module de commande 2 cadencé par un système oscillateur 3 à quartz. Pour l'affichage des indications horaires telles que l'heure et la seconde, des aiguilles sont montées sur des moteurs 4 pour être entrainées en rotation. Les moteurs utilisés sont des moteurs Lavet appelés aussi moteurs pas à pas et comprennent deux bornes de connexion Mot1, Mot2. Dans ces moteurs, un rotor 4a aimanté de forme cylindrique crée un champ magnétique radial dans l'entrefer d'un circuit magnétique 4b sur lequel est enroulée une bobine dont les bornes sont connectées au module de commande, généralement un circuit intégré, fournissant des impulsions de courant selon un ordre aux bornes, chaque impulsion faisant avancer le rotor d'un pas. La bobine est constituée par un fil très fin enroulé sur un tube isolant creux contenant à l'intérieur une partie du circuit magnétique. Un tel moteur comprend également deux positions d'équilibres stables 4c comme visible à la figure 4. Ce module de commande 2 comprend une unité de calcul 5. Le tout est alimenté par une unité d'alimentation 8 telle une pile ou une batterie. Cette unité d'alimentation fournissant une tension d'alimentation Vdd. Une masse Vss est également prévue.

Un tel moteur comprend deux positions d'équilibres stables, c'est à dire deux positions dans lesquelles le rotor se place naturellement en cas de coupure de l'alimentation électrique.

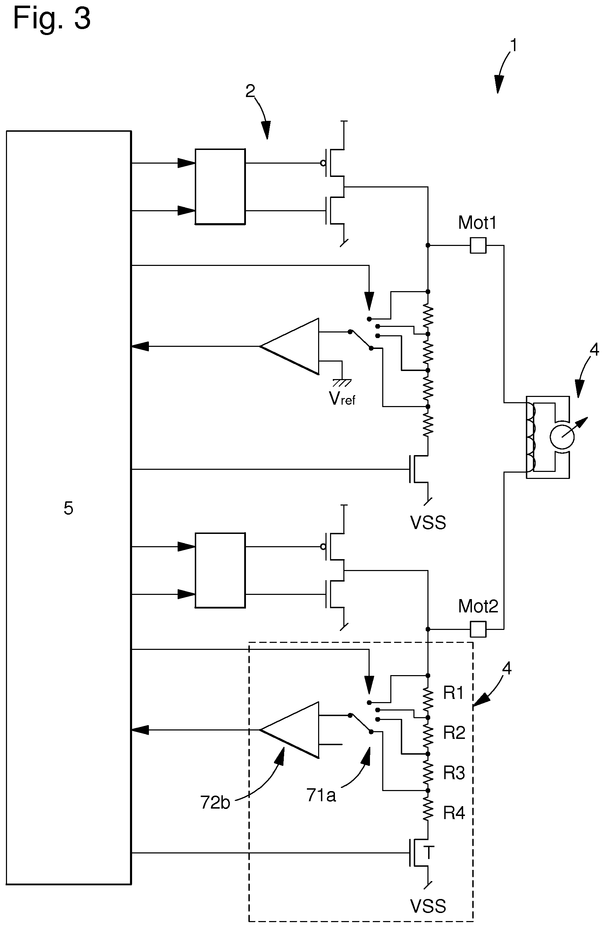

Le module de commande 2, visible à la figure 3, comprend en outre une unité de détection 6 comprenant deux circuits de détection de chocs 7. Ce circuits de détection de chocs 7 sont utilisés afin de déterminer si un choc est apparu. Ainsi, si un choc est détecté, le module de commande 2 peut agir en conséquence et envoyer une impulsion de blocage pour empêcher le rotor d'entrer en rotation. Le circuits de détection de chocs sont placés en sortie des bornes du moteur. Dans la suite de la description, l'exemple d'un circuit de détection de chocs 7 connecté à la borne négative Mot2 du moteur sera pris. A chaque borne Mot1, Mot2 du moteur, une tension Vmot est mesurée. Au niveau de chaque borne Mot1, Mot2, un buffer moteur est agencé, ces buffers moteurs comprennent une bascule B1, B2 et deux transistors de type différents montés en série, les grilles de ces transistors étant connectées à la bascule comme visible à la figure 3. Ces buffers servent à faire passer un courant soit positif, soit négatif dans la bobine du moteur afin de le faire tourner.

A la figure 2, on constate que le circuit de détection de chocs 7 peut comprendre une partie de sélection 71 connectée directement à la borne Mot 2 du moteur 4. Cette partie de sélection 71 possède une sortie connectée à une partie de comparaison 72. Cette partie de comparaison 72 est connectée à l'unité de calcul 5 de sorte à fournir le signal indiquant si un choc est détecté ou pas.

La partie de sélection comprend une série de résistance Ri connectées en série associé à un sélecteur 71a se présentant sous la forme d'un interrupteur multi-position. Ce sélecteur 71a comporte une sortie V1 et une pluralité de points de sélection pi, chacun étant associé à une résistance Ri. Le sélecteur 71a comporte en outre une bascule 71b permettant de connecter la sortie du sélecteur avec un des points de sélection pi. Cette bascule 71b permet alors de modifier la sensibilité du détecteur de chocs afin de détecter des tensions induites plus ou moins grandes et donc des chocs plus ou moins forts. Selon l'invention, la série de résistance Ri est calculée pour avoir une sensibilité allant de 50 à 600 millivolts. La sortie du sélecteur 71a est la tension V1 qui est connectée à la partie de comparaison 72. Cette partie de comparaison 72 comprend un comparateur 72b dont l'entrée positive est reliée à la sortie du sélecteur 71a et dont l'entrée négative est à une tension de référence Vref de 50mV (non représentée). Ce comparateur 72b fourni une sortie Sh_out2. La chaine de résistance Ri est contrôlée par le transistor T qui permet d'activer le détecteur de choc. Selon l'invention, chaque borne Mot1, Mot2 du moteur Lavet est muni d'un circuit de détection de chocs 7 de sorte à pouvoir être associé à un algorithme de gestion permettant, lors d'un choc, de gérer le rotor 4a comme visible à la figure 3.

Dans une première étape, le module de commande 2 est programmé pour détecter le sens de rotation du choc. Pour cela, les deux circuits de détection de chocs 7 sont utilisés. Chaque circuit de détection de chocs 7 est connecté à une borne du moteur de sorte que lors d'un choc, le rotor tourne entrainant une tension induite dans les circuits de détection de chocs 7. Ces circuits de détection de chocs 7 envoient une information au module de commande 2 indiquant qu'un choc a eu lieu. Suivant l'ordre à laquelle les informations viennent, il est facile de détecter la rotation du rotor. Comme uniquement les tensions induites positives sont détectées par l'un ou l'autre détecteur, on peut en déduire le sens de rotation du rotor.

En effet, le module de commande 2 est muni d'un programme lui permettant d'interpréter les informations envoyées par les circuits de détection de chocs 7. Pour cela, ce programme défini le sens de rotation du choc en fonction du déclenchement des circuits de détection de chocs 7.

Lors d'un choc, il y a rotation du rotor 4a, une tension induite apparait de sorte que si cette tension induite est positive alors le rotor 4a tourne dans le sens des aiguilles d'une montre alors que si la tension induite est négative alors le rotor 4a tourne dans le sens inverse de celui des aiguilles d'une montre. Bien entendu, cette détection de chocs se fait lorsque le rotor est initialement dans une des positions d'équilibres stables 4c comme visible à la figure 4.

Suite à cette détection du sens de rotation du choc, il est ensuite possible d'appliquer un protocole de compensation du choc de sorte à annuler les effets dudit choc. En effet, la présente invention propose avantageusement un protocole de compensation pour annuler ou limiter autant que possible les effets du choc.

Ce protocole de compensation consiste en l'application au moteur, par l'unité de commande 2, d'un signal de blocage. Ce signal de blocage est un signal qui permet de contrecarrer la rotation du rotor 4a lors d'un choc.

Ce signal de blocage est une impulsion envoyée à au moins l'une des bornes de connexion du moteur 4 afin d'agir sur le rotor. Cette impulsion est définie comme permettant une action contraire à celle du choc sur le rotor 4a. Ainsi, si le rotor subit un choc provoquant sa rotation dans le sens des aiguilles d'une montre alors le signal de blocage est une impulsion dont le signal est apte à entrainer le rotor dans un sens de rotation inverse de celui des aiguilles d'une montre et inversement. Selon l'invention, le signal de blocage c'est-à-dire l'impulsion de blocage est configurée pour amener le rotor dans une position souhaitée. En effet, le rotor 4a entrainé par le choc implique que l'appareillage lié audit moteur est entrainé, cet appareillage consiste en des rouages entrainant les aiguilles. Dès lors, il apparait une modification de la position des aiguilles et donc l'apparition d'une erreur dans l'affichage de l'information horaire.

Par conséquent, l'impulsion de blocage est configurée pour, non seulement bloquer la rotation du rotor suite au choc mais aussi pour garantir que le rotor retourne dans sa position stable initiale lorsque le choc est terminé et que l'impulsion de blocage est arrêtée.

Cet objectif de ramener le rotor 4a dans une position souhaitée au moment du choc implique un sous objectif à atteindre. En effet, dans ce type de moteur, il est connu une position angulaire du rotor 4a appelée point de non-retour est défini comme étant la position angulaire au-delà de laquelle le rotor ne peut plus être ramené dans la position initiale.

Effectivement, lors de la rotation du rotor, celui-ci acquiert une vitesse et par conséquent un moment d'inertie. De ce fait, s'il atteint une certaine position angulaire, il devient physiquement impossible de ramener le rotor 4a dans la position désirée. Cette position angulaire limite dépend de l'arrangement du moteur. En effet, chaque moteur comprend au moins deux alvéoles 4d ou encoches de positionnement. Ces alvéoles 4d sont agencées dans une position angulaire et définissent les positions d'équilibre stables du rotor. Or, la position angulaire limite dépend de la position de ces alvéoles 4d par rapport à la direction du flux magnétique principal généré par la bobine. Ainsi, dans le cas où les deux alvéoles sont agencées à 90 degrés, comme visible à la figure 5, la position angulaire limite est de 270 degrés c'est-à-dire la position angulaire d'une des alvéoles. Dans le cas où les alvéoles sont agencés à 45 degrés comme visible à la figure 6, la position angulaire limite est de 135 degrés.

Selon l'invention, l'impulsion de blocage est agencée pour permettre, en cas de chocs, le retour du rotor dans une position souhaitée sans que ce dernier ne dépasse une position angulaire limite. A ce titre, l'impulsion de blocage est une impulsion munie d'une pluralité de phases. Cette pluralité de phase permet d'avoir une possibilité de modifier les caractéristiques de l'impulsion de blocage.

Dans le cas présent, l'impulsion de blocage comprend deux phases, une première phase Ph1 peut être une phase dite intense c'est-à-dire durant laquelle l'intensité du couple de retenue est maximal et une seconde phase Ph2 dans laquelle le couple de retenue est moins intense.

Pour faire varier l'intensité du couple de retenue crée par l'impulsion, il est prévu de faire varier le taux de hachage c'est-à-dire le rapport cyclique de l'impulsion. Selon le taux de hachage, l'impulsion est plus ou moins intense de sorte que l'effet sur le rotor est plus ou moins sensible. Selon l'invention, il est prévu que ce taux de hachage varie de 25% à 100%. Par conséquent, il peut être avantageux d'avoir une première phase de l'impulsion de blocage ayant un taux de hachage élevé et une seconde phase ayant un taux de hachage plus faible.

Par ailleurs, il pourra être prévu d'avoir des phases de durées différentes. Par exemple, la première phase Ph1 sera courte mais avec un taux de hachage élevé alors que la seconde phase Ph2 aura une durée plus importante mais un taux de hachage plus faible.

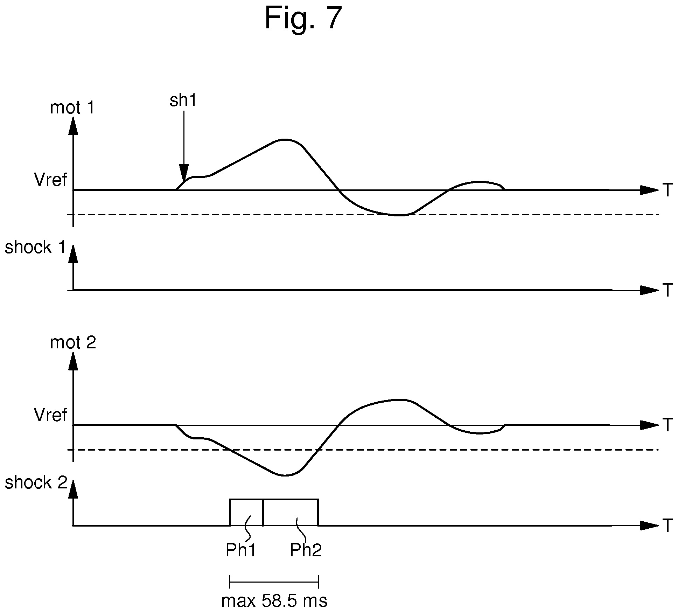

Dans un exemple préféré, la seconde phase aura une durée égale à deux fois la durée de la première phase. La première phase aura ici une durée maximale de 19.5 millisecondes. Dans ce cas-là et selon la présente invention, la durée totale de l'impulsion de blocage sera au maximum de 58.5 millisecondes comme visible à la figure 7.

Ainsi, l'envoi de l'impulsion de blocage, dont la polarité est inverse à celle de la rotation du rotor 4a, permet de stopper la rotation du rotor et de le ramener vers la position souhaitée.

Une fois dans cette position souhaitée, le rotor se dirige naturellement vers la position d'équilibre stable initiale lorsque l'impulsion est stoppée.

Toutefois, il est avantageusement prévu une variante dans laquelle ce déplacement vers une position d'équilibre stable est détecté. Pour cela, les circuits détecteurs de chocs sont réglés pour avoir une sensibilité maximale. Pour cela, la bascule 71b est commutée pour agir sur la série de résistance Ri et pour sélectionner la plus faible sensibilité, ici 50mV.

Cette faible sensibilité permet de mesurer la tension induite suite au très faible déplacement du rotor lorsque celui-ci va dans une position d'équilibre stable. Suivant le signe, positif ou négative, de cette tension induite, il devient alors possible de savoir vers laquelle des positions d'équilibre stable, le rotor est allé. Par conséquent, l'unité de calcul 5 peut prendre en compte cette information pour les informations horaires.

## Revendications

1. Dispositif électronique (1) comprenant une unité de calcul (5) capable de générer un signal représentatif d'une grandeur physique, d'un moteur (4) entrainant un dispositif d'affichage, ledit moteur comprenant un rotor (4a) dans un circuit magnétique (4b), deux bornes (Mot1, Mot2) par lesquelles l'unité de calcul le commande, le dispositif électronique comprenant en outre deux circuits de détection de chocs (7), chaque circuit de détection de chocs étant connecté entre l'unité de calcul et une borne du moteur pour la détection d'un choc externe appliqué au moteur,
ledit moteur présentant une première position d'équilibre stable placée à une position angulaire de référence et une seconde position d'équilibre stable placée à 180 degrés de la première position angulaire stable, pour chaque sens de rotation, une position angulaire limite à partir de laquelle il n'est plus possible de ramener le rotor du moteur dans une position angulaire antérieure,
l'unité de calcul utilisant un algorithme permettant, suite à un chocs, de détecter le sens de rotation du rotor en analysant une tension induite détectée par ledit circuit de détection de chocs et ordonner l'envoi d'une impulsion de blocage ayant une polarité inverse de celle de la tension induite,
l'impulsion de blocage présentant une durée maximale de 58.5ms permettant de stopper la rotation du rotor due à un choc et de la ramener dans une position angulaire prédéterminée avant que la position angulaire limite soit atteinte.

2. Dispositif électronique selon la revendication 1, **caractérisé en ce que** l'impulsion de blocage a un taux de hachage variant de 25% à 100%.

3. Dispositif électronique selon la revendication 2, **caractérisé en ce que** l'impulsion de blocage comprend au moins une première (Ph1) et une seconde (Ph2) phase temporelle distinctes, chaque phase pouvant présenter un taux de hachage distinct.

4. Dispositif électronique selon la revendication 3, **caractérisé en ce que** la seconde phase présente une durée supérieure à la première phase.

5. Dispositif électronique selon la revendication 4, **caractérisé en ce que** la seconde phase présente une durée deux fois supérieure à la première phase.

6. Dispositif électronique selon l'une des revendications précédentes, **caractérisé en ce que** le circuit de détection de chocs (7) comprend une partie de sélection (71) apte à permettre un réglage de la sensibilité de détection.

7. Dispositif électronique selon la revendication 6, **caractérisé en ce que** la partie de sélection permet une plage sensibilité allant de 50 à 600 millivolts.

8. Dispositif électronique selon l'une des revendications précédentes, **caractérisé en ce que** le dispositif électronique comprend deux circuits de détection de chocs.

9. Dispositif électronique selon l'une des revendications précédentes, **caractérisé en ce que** le moteur (4) est agencé de manière à ce que les positions d'équilibre stables du rotor lorsqu'aucun courant ne circule dans la bobine soient placées à un angle de 30 à 90 degrés par rapport à l'axe du flux principal généré par la bobine dans le circuit magnétique lorsque celle-ci est parcourue par un courant

10. Dispositif électronique selon l'une des revendications précédentes, **caractérisé en ce que** l'impulsion de blocage est envoyée au moteur (4) via l'une ou l'autre de ses bornes de connexion.

## Patentansprüche

1. Elektronische Vorrichtung (1), umfassend eine Recheneinheit (5), die geeignet ist, ein eine physikalische Größe repräsentierendes Signal zu erzeugen für einen eine Anzeigevorrichtung antreibenden Motor (4), wobei der Motor einen Rotor (4a) in einem Magnetkreis (4b) und zwei Anschlüsse (Mot1, Mot2) umfasst, über die ihn die Recheneinheit steuert, wobei die elektronische Vorrichtung ferner zwei Stoßdetektionsschaltungen (7) umfasst, wobei jede Stoßdetektionsschaltung zwischen die Recheneinheit und einen Anschluss des Motors geschaltet ist, um einen auf den Motor ausgeübten äußeren Stoß zu detektieren,
wobei der Motor eine erste stabile Gleichgewichtsposition, die sich an einer Referenzwinkelposition befindet, und eine zweite stabile Gleichgewichtsposition, die zu der ersten stabilen Winkelposition um 180 Grad versetzt ist, und in jeder Drehrichtung eine Grenzwinkelposition besitzt, ab der es nicht mehr möglich ist, den Rotor des Motors in eine frühere Winkelposition zurückzustellen,
wobei die Recheneinheit einen Algorithmus verwendet, der ermöglicht, nach einem Stoß die Drehrichtung des Rotors zu detektieren, indem eine induzierte Spannung analysiert wird, die von der Stoßdetektionsschaltung detektiert wird, und das Senden eines Blockierimpulses zu befehlen, der eine zu jener der induzierten Spannung entgegengesetzte Polarität besitzt, wobei der Blockierimpuls eine maximale Dauer von 58,5 ms besitzt, die ermöglicht, die durch einen Stoß bedingte Drehung des Rotors anzuhalten und ihn in eine vorgegebene Winkelposition zurückzubringen, bevor die Grenzwinkelposition erreicht wird.

2. Elektronische Vorrichtung nach Anspruch 1, **dadurch gekennzeichnet, dass** der Blockierimpuls ein Hackverhältnis aufweist, das im Bereich von 25 % bis 100 % variiert.

3. Elektronische Vorrichtung nach Anspruch 2, **dadurch gekennzeichnet, dass** der Blockierimpuls mindestens eine erste (Ph1) und eine zweite Phase (Ph2) umfasst, die zeitlich verschieden sind, wobei jede Phase ein unterschiedliches Hackverhältnis aufweisen kann.

4. Elektronische Vorrichtung nach Anspruch 3, **dadurch gekennzeichnet, dass** die zweite Phase eine Dauer besitzt, die größer als jene der ersten Phase ist.

5. Elektronische Vorrichtung nach Anspruch 4, **dadurch gekennzeichnet, dass** die zweite Phase eine Dauer besitzt, die doppelt so groß wie jene der ersten Phase ist.

6. Elektronische Vorrichtung nach einem der vorhergehenden Ansprüche, **dadurch gekennzeichnet, dass** die Stoßdetektionsschaltung (7) einen Auswahlabschnitt (71) enthält, der geeignet ist, eine Regulierung der Detektionsempfindlichkeit zu ermöglichen.

7. Elektronische Vorrichtung nach Anspruch 6, **dadurch gekennzeichnet, dass** der Auswahlabschnitt einen Empfindlichkeitsbereich von 50 bis 600 Millivolt ermöglicht.

8. Elektronische Vorrichtung nach einem der vorhergehenden Ansprüche, **dadurch gekennzeichnet, dass** die elektronische Vorrichtung zwei Stoßdetektionsschaltungen umfasst.

9. Elektronische Vorrichtung nach einem der vorhergehenden Ansprüche, **dadurch gekennzeichnet, dass** der Motor (4) in einer Weise angeordnet ist, dass die stabilen Gleichgewichtspositionen des Rotors dann, wenn in der Spule keinerlei Strom fließt, bei einem Winkel im Bereich von 30 bis 90 Grad liegen in Bezug auf die Hauptflussachse, die von der Spule in dem Magnetkreis erzeugt wird, wenn diese von einem Strom durchflossen wird.

10. Elektronische Vorrichtung nach einem der vorhergehenden Ansprüche, **dadurch gekennzeichnet, dass** der Blockierimpuls über den einen oder den anderen seiner Verbindungsanschlüsse an den Motor (4) gesendet wird.

## Claims

1. Electronic device (1) comprising a calculation unit (5) capable of generating a signal representative of a physical parameter, for a motor (4) driving a display device, said motor comprising a rotor (4a) in a magnetic circuit (4b), two terminals (Mot1, Mot2) via which the calculation unit controls the motor, the electronic device further comprising two shock detector circuits (7), each detector circuit being connected between the calculation unit and a motor terminal for the detection of an external shock applied to the motor,
said motor having a first position of stable equilibrium placed at a reference angular position and a second position of stable equilibrium placed at 180° from the first stable angular position, for each direction of rotation, a maximum angular position from which it is no longer possible to return the motor rotor into a prior angular position,
the calculation unit using an algorithm which, following a shock, can detect the direction of rotation of the rotor by analysing an induced voltage detected by said detector circuit and cause to be sent a blocking pulse of reverse polarity to that of the induced voltage,
the blocking pulse having a maximum duration of 58.5 ms enabling to stop the rotor from rotating and to bring it back into a predetermined angular position before the maximum angular position is reached.

2. Electronic device according to claim 1, **characterized in that** the blocking pulse has a chopping rate that varies from 25% to 100%.

3. Electronic device according to claim 2, **characterized in that** the blocking pulse comprises at least a first (Ph1) and a second (PH2) distinct temporal phase, each phase being capable of presenting a distinct chopping rate.

4. Electronic device according to claim 3, **characterized in that** the second phase has a longer duration than the first phase.

5. Electronic device according to claim 4, **characterized in that** the second phase has a duration two times longer than the first phase.

6. Electronic device according to claim 1, **characterized in that** the shock detector circuit (7) comprises a selection part (71) adapted to allow adjustment of detection sensitivity.

7. Electronic device according to claim 6, **characterized in that** the selection part allows for a range of sensitivity from 50 to 600 millivolts.

8. Electronic device according to claim 1, **characterized in that** the electronic device comprises two shock detector circuits.

9. Electronic device according to claim 1, **characterized in that** the motor (4) is arranged such that the positions of stable equilibrium of the rotor when there is no current flowing through the coil are placed at an angle of 30 to 90 degrees with respect to the axis of the main flux generated by the coil in the magnetic circuit when a current passes therethrough.

10. Electronic device according to claim 1, **characterized in that** the blocking pulse is sent to the motor (4) via one or other of the connection terminals thereof.
